# EUROPÄISCHE PATENTSCHRIFT

(11) **EP 4 313 630 B1**
(45) Veröffentlichungstag und Bekanntmachung des Hinweises auf die Patenterteilung: **15.10.2025**
(21) Anmeldenummer: 21827187.2
(22) Anmeldetag: 29.11.2021
(51) Int. Cl.: B60C 11/03, B60C 11/11, B60C 11/13

(54) **FAHRZEUGLUFTREIFEN**
PNEUMATIC VEHICLE TYRE
PNEUMATIQUE DE VÉHICULE

(30) Priorität: 26.03.2021 DE 102021203049
(43) Veröffentlichungstag der Anmeldung: 07.02.2024
(73) Patentinhaber: Continental Reifen Deutschland GmbH, 30175 Hannover (DE)
(72) Erfinder: SOYYUECE, Atakan, 30165 Hannover (DE); ÖZÜDURU, Ahmet, 30165 Hannover (DE); PAGAC, Lubomir, 30165 Hannover (DE); ECKE, Stefan, 30165 Hannover (DE)
(74) Vertreter: Continental Corporation
(86) Internationale Anmeldenummer: PCT/DE2021/200216
(87) Internationale Veröffentlichungsnummer: WO 2022/199730

(56) Entgegenhaltungen:
- US-A1- 2004 069 389
- US-A1- 2017 210 175
- US-A1- 2019 054 775

## Beschreibung

Die Erfindung betrifft einen Fahrzeugluftreifen mit einem Laufstreifen mit zumindest einer an zumindest einer Seite von einer Umfangsrille mit einem Rillengrund begrenzten Profilblockreihe, welche durch eine Vielzahl von in Draufsicht parallel zueinander verlaufenden in Einmündungsbereichen in die Umfangsrille einmündenden Querrillen in Profilblöcke gegliedert ist, wobei die Profilblöcke jeweils zwei durch die Umfangsrille und die Querrillen gebildete Blockeckbereiche und eine sich zwischen den Blockeckbereichen und zwischen den Einmündungsbereichen der Querrillen erstreckende, an der Umfangsrille ausgebildete, zum Rillengrund der Umfangsrille verlaufende, seitliche Blockflanke aufweisen, wobei sich die seitliche Blockflanke aus einem angefasten Blockflankenumfangsabschnitt mit einer eine Schrägfläche bildenden, zur Laufstreifenperipherie verlaufenden Fase und einem fasenfreien Blockflankenumfangsabschnitt, welcher an einer an der Laufstreifenperipherie verlaufenden Blockkante endet, zusammensetzt.

Ein Fahrzeugluftreifen der eingangs genannten Art ist beispielsweise aus der EP 3 683 069 A1 bekannt. Der Laufstreifen des Fahrzeugluftreifens ist laufrichtungsgebunden ausgeführt und weist eine zumindest an einer Seite von einer Umfangsrille begrenzte, durch Querrillen in Profilblöcke gegliederte Profilblockreihe auf. Gemäß einem Ausführungsbeispiel sind die Profilblöcke an der Umfangsrille jeweils durch eine seitliche Blockflanke mit einem einlaufenden Ende und einem auslaufenden Ende begrenzt, wobei sich die Blockflanke aus zwei Blockflankenumfangsabschnitten zusammensetzt. Der eine Blockflankenumfangsabschnitt setzt sich, im Querschnitt betrachtet, aus einem radial inneren Flankenabschnitt und einer zur Laufstreifenperipherie verlaufenden Fase zusammen. Der radial innere Flankenabschnitt verläuft, im Querschnitt betrachtet, zur radialen Richtung unter einem Winkel von 0° bis 7°. Die Fase verläuft, im Querschnitt betrachtet, zur radialen Richtung unter einem konstanten Winkel von 40° bis 60°, wobei die Breite der Fase über ihre Umfangserstreckung in Richtung zum auslaufenden Ende der Blockflanke kontinuierlich zunimmt. Der andere Blockflankenumfangsabschnitt endet an einer an der Laufstreifenperipherie verlaufenden Blockkante. Die getroffenen Maßnahmen sorgen beim Fahren auf mit Schnee bedeckter Fahrbahn für ein schnelles und effektives Füllen der Umfangsrille mit Schnee, sodass der Effekt der Schnee-Schnee-Reibung in stärkerem Ausmaß auftritt.

Aus der US 2019/0054775 A1 ist ein Fahrzeugluftreifen mit einem Laufstreifen mit einer beidseitig von je einer Umfangsrille begrenzten, mittleren Profilblockreihe mit durch Querrillen voneinander getrennten Profilblöcken bekannt. Die Profilblöcke sind entlang der Querrillen mit Schrägflächen versehen, wobei die an den Umfangsrillen liegenden Einmündungsbereiche der Querrillen in Draufsicht V-förmig verbreitert ausgeführt sind und wobei an jedem Einmündungsbereich an die jeweilige Schrägfläche eine zur entsprechenden Umfangsrille verlaufende Eckfase anschließt. Der Fahrzeugluftreifen soll sich für den Ganzjahreseinsatz eignen, wobei der Laufstreifen eine günstige Steifigkeit und der Reifen eine gleichmäßige Druckverteilung in der Bodenaufstandsfläche aufweisen soll.

Die US 2017/0210175 A1 offenbart einen Fahrzeugluftreifen mit einem Laufstreifen mit zwei schulterseitigen Profilblockreihen, zwei halbmittigen Profilblockreihen und einer zentralen Profilblockreihe, wobei die Profilbockreihen durch Umfangsrillen getrennt sind. Die schulterseitigen Profilblockreihen sowie eine der halbmittigen Profilblockreihen sind bzw. ist durch Querrillen in Profilblöcke gegliedert. Die Profilblöcke weisen an der bzw. jeder angrenzenden Umfangsrille eine seitliche Blockflanke auf, welche sich aus einem angefasten Blockflankenumfangsabschnitt und einem fasenfreien Blockflankenumfangsabschnitt zusammensetzt. Der Reifen soll eine gute Schneeperformance aufweisen.

Aus der US 2004/0069389 A1 ist ein Fahrzeugluftreifen mit einem Laufstreifen mit Profilblockreihen bekannt, welche durch Querrillen getrennte Profilblöcke mit seitlichen Blockflanken an einer Umfangsrille aufweisen. Die Profilblöcke sind an der Umfangsrille je mit einer in Draufsicht in Umfangsrichtung langgestreckten Aussparung mit einem rampenartigen, zur Außenfläche des jeweiligen Profilblockes verlaufenden Boden versehen. Der Reifen soll gute Traktionseigenschaften auf nasser Fahrbahn aufweisen.

Bei im Hinblick auf eine gute Schneeperformance ausgelegten Laufstreifenprofilen ist insbesondere darauf zu achten, dass eine gute Performance auf trockener und nasser Fahrbahn aufrecht erhalten bleibt, sodass etwa bei witterungsbedingten Änderungen der Fahrbahnbeschaffenheit die Reifen gute Fahreigenschaften ermöglichen. Am Laufstreifenprofil vorgesehene Features, welche für eine dieser Eigenschaften von Vorteil sind, können eine der anderen Eigenschaften beeinträchtigen. Es besteht daher ein Zielkonflikt zwischen den genannten Eigenschaften.

Der Erfindung liegt daher die Aufgabe zugrunde, bei einem Fahrzeugluftreifen der eingangs genannten Art die Balance zwischen der Trocken-, Nässe- und Schneeperformance weiter zu verbessern, den diesbezüglich bestehenden Zielkonflikt somit auf einem "höheren Niveau" zu lösen.

Gelöst wird die gestellte Aufgabe erfindungsgemäß dadurch, dass Einmündungsbereiche von Querrillen jeweils durch eine gegenüber dem Niveau der seitlichen Blockflanken in die Profilblockreihe in axialer Richtung hineinragende, zur Laufstreifenperipherie offene, sich von zur Umfangsrille kontinuierlich verbreiternde Kerbe gebildet sind, welche zwei an den Blockeckbereichen benachbarter Profilblöcke ausgebildete, in Draufsicht V-förmig zueinander sowie zwischen der jeweiligen Querrille und der Umfangsrille verlaufende Begrenzungsflächen aufweist, wobei an die eine Begrenzungsfläche ein fasenfreier Blockflankenumfangsabschnitt und an die andere Begrenzungsfläche ein angefaster Blockflankenumfangsabschnitt anschließt.

Gemäß der Erfindung sind an den seitlichen Blockflanken spezielle Kombinationen dreier Profilfeatures vorgesehen. Jede Kombination umfasst eine Kerbe, einen fasenfreien Blockflankenumfangsabschnitt und einen angefasten Blockflankenumfangsabschnitt. Die Kerbe und der fasenfreie Blockflankenumfangsabschnitt stellen Griffkanten zur Verfügung, welche für das Griffverhalten auf nasser und/oder verschneiter Fahrbahn günstig sind. Durch den angefasten Blockflankenumfangsabschnitt wird unter Querbelastung dem im Hinblick auf die Trockenperformance ungünstigen "Einrollen" des Blockkantenbereiches entgegengewirkt, sodass eine gute Trockenperformance erhalten bleibt. Zusätzlich sammelt sich in den Kerben beim Abrollen des Reifens auf schneebedeckter Fahrbahn Schnee an, wobei der Schnee durch die spezielle V-Form der Kerben wirkungsvoll verdichtet und in diesen gehalten wird, sodass die Kerben als "Schneetaschen" wirken, welche über den Effekt der Schnee-Schnee-Reibung, insbesondere bei Querbeanspruchungen des Reifens, den Schneegriff verbessern. Die getroffenen Maßnahmen ermöglichen daher eine besonders vorteilhafte Balance zwischen der Trocken-, Nässe- und Schneeperformance, sodass der diesbezüglich bestehende Zielkonflikt auf hohem Niveau gelöst ist.

Gemäß einer bevorzugten Ausführung weist der angefaste Blockflankenumfangsabschnitt eine Umfangslänge von 40% bis 60%, insbesondere von 45% bis 55%, der Umfangslänge des zugehörigen Profilblockes auf. Eine solche "Zweiteilung" der Blockflanke ist im Hinblick auf die Balance zwischen der Trockenperformance und der Performance auf nasser und/oder mit Schnee bedeckter Fahrbahn besonders günstig.

Für die Wirkung der Kerbe als Schneetasche ist es von Vorteil, wenn die in Draufsicht V-förmig zueinander verlaufenden Begrenzungsflächen der Kerbe einen Winkel von 45° bis 85°, insbesondere von 60° bis 80°, einschließen. Derart zueinander orientierte Begrenzungsflächen begünstigen beim Fahren auf Schnee die Verdichtung von Schnee in der Kerbe.

Gemäß einer weiteren bevorzugten Ausführung verlaufen die in Draufsicht V-förmig zueinander verlaufenden Begrenzungsflächen der Kerbe zur axialen Richtung jeweils unter Winkel von zumindest 5°, insbesondere von zumindest 10°. Die Begrenzungsflächen stellen daher zur axialen Richtung geneigte Griffkanten zur Verfügung, was zur Verbesserung des Schneegriffs unter seitlicher Beanspruchung beiträgt.

Bei einer weiteren bevorzugten Ausführung weist die Kerbe einen zwischen den Begrenzungsflächen verlaufenden Boden auf, welcher, im in axialer Richtung ausgerichteten Querschnitt betrachtet, knickfrei an den Rillengrund der Umfangsrille anschließt, sodass Rissbildungen im Gummimaterial vorgebeugt ist.

Eine weitere bevorzugte Ausführung ist dadurch gekennzeichnet, dass die Kerbe an der Umfangsrille eine zwischen ihren Begrenzungsflächen parallel zur Laufstreifenperipherie ermittelte Breite aufweist, welche 120% bis 180%, insbesondere 140% bis 160%, bevorzugt 145% bis 155%, einer an der Laufstreifenperipherie zwischen Blockkanten ermittelten Breite der Querrille beträgt, wobei die Breite an der schmalsten Stelle der Querrille ermittelt ist. Diese Maßnahme ist für die Wirkung der Kerbe als Schneetasche von zusätzlich von Vorteil, trägt somit zu einer weiteren Verbesserung der Schneeperformance bei.

Bei einer weiteren bevorzugten Ausführung weist die Kerbe eine gegenüber dem Niveau der Blockflanke in axialer Richtung ermittelte Tiefe von 0,5 mm bis 2,5 mm, insbesondere von 1,0 mm bis 2,0 mm, auf, wobei die Tiefe - bei bis zur Laufstreifenperipherie reichenden Begrenzungsflächen - relativ zum radial äußeren Ende von einer der Begrenzungsflächen ermittelt ist und wobei die Tiefe - falls nur eine der oder keine der Begrenzungsfläche(n) bis zur Laufstreifenperipherie reicht - relativ zum radial äußeren Ende jener Begrenzungsfläche ermittelt ist, welches in radialer Richtung einen größeren Abstand zur Laufstreifenperipherie aufweist. Auch diese Maßnahme begünstigt die Wirkung der Kerbe als Schneetasche.

Eine weitere bevorzugte Ausführung ist dadurch gekennzeichnet, dass die Begrenzungsflächen der Kerbe, im in radialer Richtung verlaufenden, in Draufsicht senkrecht zu ihrer Erstreckungsrichtung ausgerichteten Querschnitt betrachtet, zur radialen Richtung unter einem Winkel von 0° bis 3° verlaufen. Derart geneigte Begrenzungsflächen stellen an ihren radial äußeren Enden für das Griffverhalten auf nasser und/oder verschneiter Fahrbahn vorteilhafte Griffkanten zur Verfügung.

Gemäß einer weiteren bevorzugten Ausführung reicht die eine Begrenzungsfläche der Kerbe bis zur Laufstreifenperipherie und ist in flächiger Fortführung einer die Querrille mitbegrenzenden Blockflanke des Profilblockes ausgeführt. Diese Begrenzungsfläche stellte daher bereits bei neuem Reifen eine an der Laufstreifenperipherie liegende Griffkante zur Verfügung. Die flächige Fortführung ist insbesondere für die Trockenperformance günstig.

Die weiteren nachfolgend erwähnten bevorzugten Ausführungen der Erfindung befassen sich mit einer speziell ausgeführten Eckfase.

Bevorzugter Weise ist an der einen Begrenzungsfläche der Kerbe eine zur Laufstreifenperipherie sowie in Draufsicht zwischen der Querrille und der Umfangsrille verlaufende, den Blockeckbereich abschrägende Eckfase ausgebildet. Diese vermeidet beim Abrollen ein für den Abrieb des Laufstreifens ungünstiges Verbiegen des Blockeckbereiches und trägt somit zu einer guten Trockenperformance bei.

Es ist es von Vorteil, wenn die Eckfase und die Fase des angefasten Blockflankenumfangsabschnittes in radialer Richtung bis in eine Tiefe von 1,0 mm bis 3,0 mm, insbesondere von 1,5 mm bis 2,5 mm, reichen.

Ferner ist es günstig, wenn die Eckfase und die Fase des angefasten Blockflankenumfangsabschnittes über eine gemeinsame Begrenzungskante aneinander anschließen.

Darüber hinaus ist es von Vorteil, wenn die Eckfase und die Fase des angefasten Blockflankenumfangsabschnittes jeweils eine radial innere Fasenkante aufweisen, welche am radial inneren Ende der gemeinsamen Begrenzungskante zusammentreffen.

Insbesondere ist der eine Blockeckbereich des Profilblockes ein stumpfwinkeliger Blockeckbereich und der andere Blockeckbereich des Profilblockes ist ein spitzwinkliger Blockeckbereich, wobei die Eckfase am spitzwinkeligen Blockeckbereich ausgebildet ist und wobei, die Querrille - bezogen auf die Rillenmittellinie - mit der Umfangsrichtung einen über den stumpfwinkligen Blockeckbereich gemessenen stumpfen Supplementwinkel und einen über den spitzwinkligen Blockeckbereich gemessenen spitzen Supplementwinkel einschließt.

Eine weitere bevorzugte Ausführung ist dadurch gekennzeichnet, dass der Laufstreifen laufrichtungsgebunden ausgeführt ist, wobei beim Abrollen des Reifens bei Vorwärtsfahrt - bezogen auf jeden Profilblock - der Blockeckbereich, an welchem die Eckfase ausgebildet ist, vor dem jeweils anderen Blockeckbereich in den Untergrund eintritt. Die Eckfase befindet sich daher an dem zuerst in den Untergrund eintretenden, besonders belasteten Blockeckbereich.

Weitere Merkmale, Vorteile und Einzelheiten der Erfindung werden nun anhand der Zeichnung, die schematisch ein Ausführungsbeispiel der Erfindung zeigt, näher beschrieben. Dabei zeigen
Fig. 1 eine vereinfachte und vergrößerte Draufsicht auf einen in die Ebene abgewickelten Ausschnitt eines Laufstreifens eines Fahrzeugluftreifens mit einer Ausführungsvariante der Erfindung,
Fig. 2 eine vergrößerte Draufsicht auf das Detail Z₂ der Fig. 1,
Fig. 3 einen Schnitt entlang der Linie III-III der Fig. 2,
Fig. 4 einen Schnitt entlang der Linie IV-IV der Fig. 2,
Fig. 5 einen Schnitt entlang der Linie V-V der Fig. 2,
Fig. 6 eine vergrößerte Draufsicht auf das Detail Z₆ der Fig. 2 und
Fig. 7 eine Schrägansicht gemäß der in Fig. 2 durch den Pfeil S₇ angedeuteten Sichtrichtung.

Gemäß der Erfindung ausgeführte Fahrzeugluftreifen sind insbesondere Reifen in Radialbauart für Personenkraftwagen, Vans oder Light-Trucks, wobei die Reifen zum Fahren unter winterlichen Fahrbedingungen vorgesehen sind.

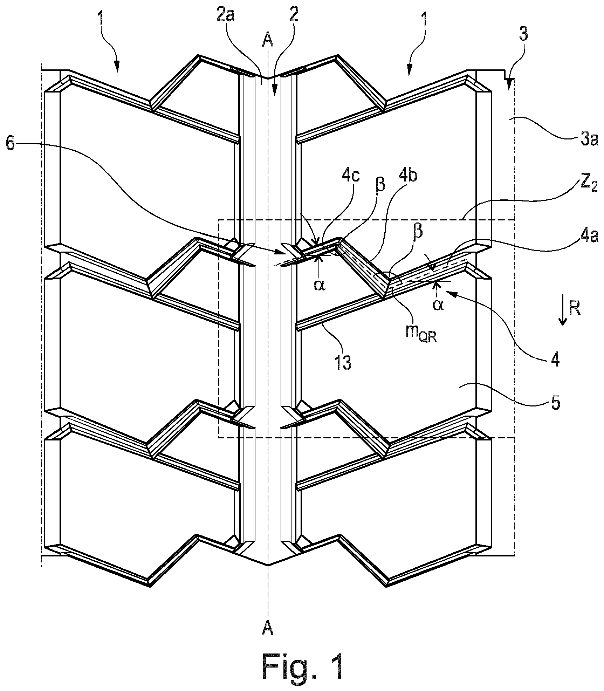

Fig. 1 zeigt eine Draufsicht auf einen Ausschnitt eines Laufstreifens eines Fahrzeugluftreifens, wobei der Laufstreifen beim gezeigten Ausführungsbeispiel mit einer laufrichtungsgebunden ausgeführten Profilierung versehen ist und der Fahrzeugluftreifen derart am Fahrzeug zu montieren ist, dass er die durch den Pfeil R symbolisierte Abrollrichtung bei Vorwärtsfahrt aufweist. Die Reifenäquatorialebene ist durch eine Linie A-A angedeutet.

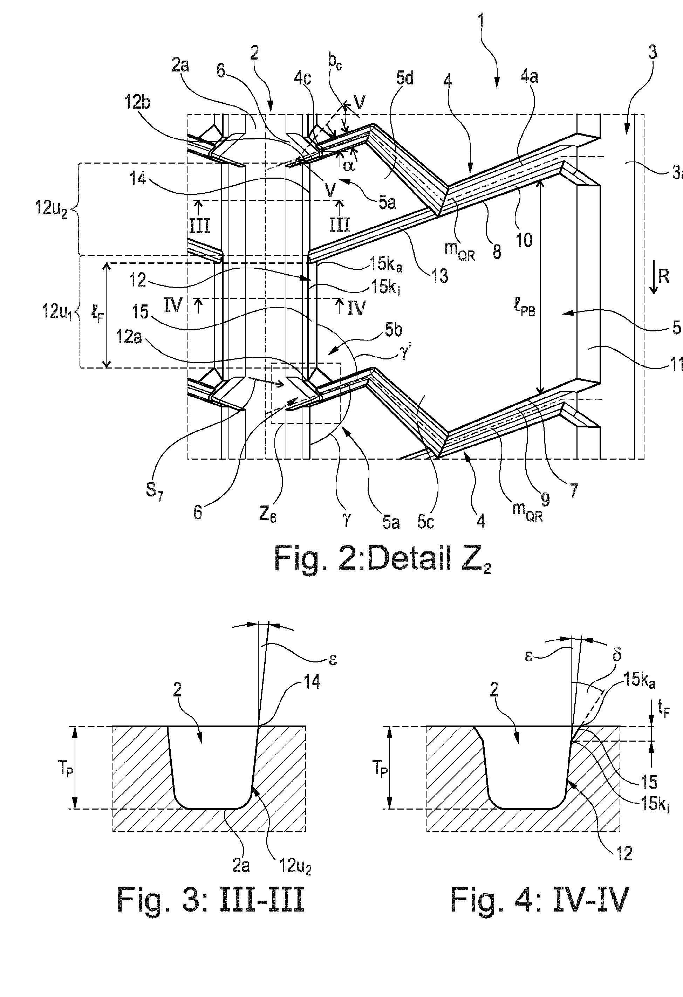

Der Laufstreifen weist zwei in Umfangsrichtung umlaufende mittlere Profilblockreihen 1 auf, wobei die eine mittlere Profilblockreihe 1 bezüglich der Reifenäquatorialebene (Linie A-A) symmetrisch zur anderen mittleren Profilblockreihe 1 ausgeführt ist. Die mittleren Profilblockreihen 1 sind durch eine in Draufsicht gerade verlaufende, zentrale Umfangsrille 2 getrennt und laufstreifenaußenseitig jeweils durch eine schulterseitige Umfangsrille 3 begrenzt. Die Umfangsrillen 2, 3 sind in der jeweils vorgesehenen Profiltiefe T_{P} (Fig. 3, Fig. 4, für die Umfangsrille 2 gezeigt) ausgeführt, welche für den bevorzugten Reifentyp üblicherweise 6,5 mm bis 13,0 mm beträgt, und weisen einen auf der Profiltiefe T_{P} verlaufenden Rillengrund 2a (vergl. Fig. 3) bzw. 3a auf.

Jede mittlere Profilblockreihe 1 ist durch eine Vielzahl von in Draufsicht parallel zueinander sowie zick-zack-förmig verlaufenden Querrillen 4 in Profilblöcke 5 strukturiert. Die Querrillen 4 münden laufstreifenaußenseitig in die jeweilige schulterseitige Umfangsrille 3 und laufstreifeninnenseitig jeweils in eine an der zentralen Umfangsrille 2 ausgebildete, einen Einmündungsbereich bildende, zur Laufstreifenperipherie offene Kerbe 6 ein, auf deren Ausgestaltung noch genauer eingegangen wird.

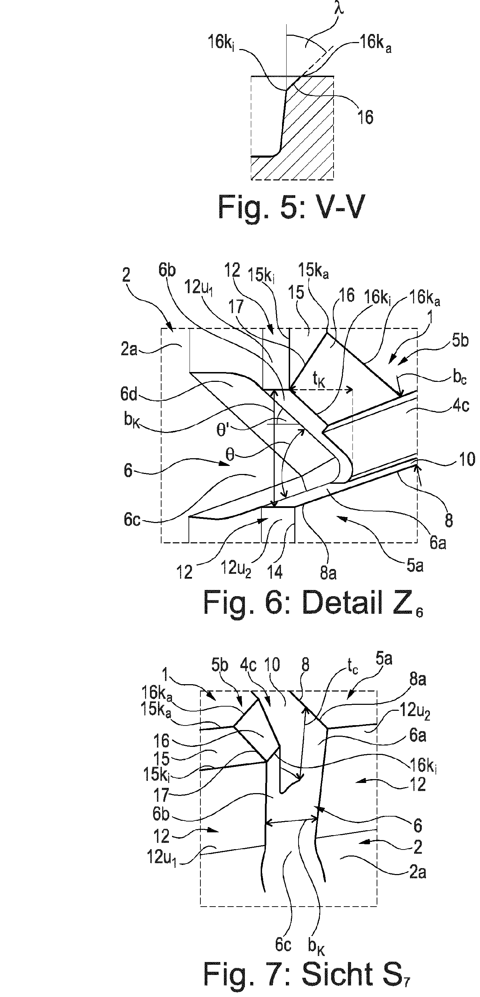

Die Querrillen 4 setzen sich beim gezeigten Ausführungsbeispiel, in Draufsicht betrachtet, jeweils aus einem in die entsprechende schulterseitige Umfangsrille 3 einmündenden Rillenabschnitt 4a, einem mittleren Rillenabschnitt 4b und einem in die Kerbe 6 einmündenden Rillenabschnitt 4c zusammen. Die Rillenabschnitte 4a, 4c verlaufen in Draufsicht betrachtet gerade sowie zur axialen Richtung jeweils unter einem Winkel α von 5° bis 25° und sind bezüglich der axialen Richtung gleichsinnig geneigt. Der mittlere Rillenabschnitt 4b verläuft in Draufsicht betrachtet gerade, ist bezüglich der axialen Richtung gegensinnig zu den Rillenabschnitten 4a, 4c geneigt und schließt mit diesen jeweils einen Winkel β von 95° bis 130° ein. Die Neigung und die Länge der Rillenabschnitte 4a, 4b, 4c ist derart gewählt, dass beim Abrollen des Reifens bei Vorwärtsfahrt (Pfeil R) die Querrille 4 über die aneinander anschließenden, blockinnenseitigen Abschnittenden der Rillenabschnitte 4a, 4b zuerst in den Untergrund eintritt. Die Winkel α und β sind jeweils bezüglich einer dem Rillenverlauf folgenden Rillenmittellinie m_{QR} ermittelt. Der Rillenabschnitt 4c weist an der Laufstreifenperipherie eine Breite b_{c} (Fig. 2) von 2,0 mm bis 4,0 mm und in radialer Richtung eine Tiefe t_{c} (Fig. 7) von 30% bis 70% der Profiltiefe T_{P} (Fig. 3, Fig. 4) auf.

Die weitere Ausgestaltung der Profilblöcke 5 wird nachfolgend anhand eines einzelnen Profilblockes 5 weiter erläutert.

Gemäß Fig. 2 weist der Profilblock 5 an der einen an ihn angrenzenden Querrille 4 eine Blockkante 7 und an der anderen an ihn angrenzenden Querrille 4 eine Blockkante 8 auf, wobei beim Abrollen des Reifens bei Vorwärtsfahrt (Pfeil R) bei jedem Profilblock 5 die Blockkante 7 vor der Blockkante 8 in den Untergrund eintritt, sodass die Blockkante 7 nachfolgend als "einlaufende Blockkante 7" und die Blockkante 8 als "auslaufende Blockkante 8" bezeichnet wird. Der Profilblock 5 weist ferner eine zwischen der einlaufenden Blockkante 7 und der auslaufenden Blockkante 8 ermittelte Umfangslänge l_{PB} auf, ist zu den Querrillen 4 durch eine von der einlaufenden Blockkante 7 ausgehende, in radialer Richtung verlaufende Blockflanke 9 und eine von der auslaufenden Blockkante 8 ausgehende, in radialer Richtung verlaufende Blockflanke 10 sowie an der schulterseitigen Umfangsrille 3 durch eine zum Rillengrund 3a verlaufende, seitliche Blockflanke 11 und an der zentralen Umfangsrille 2 durch eine zum Rillengrund 2a verlaufende, seitliche Blockflanke 12 begrenzt.

Der Profilblock 5 weist an der zentralen Umfangsrille 2 einen stumpfwinkeligen Blockeckbereich 5a und einen spitzwinkeligen Blockeckbereich 5b auf, wobei die Blockeckbereiche 5a, 5b durch die zentrale Umfangsrille 2 und die in diese einmündenden, zur axialen Richtung unter dem Winkel α geneigten Rillenabschnitte 4c der Querrille 4 gebildet sind. Der Rillenabschnitt 4c schließt - bezogen auf die Rillenmittellinie m_{QR} - mit der Umfangsrichtung einen über den stumpfwinkligen Blockeckbereich 5a gemessenen stumpfen Supplementwinkel γ und einen über den spitzwinkligen Blockeckbereich 5b gemessenen spitzen Supplementwinkel γ' ein, wobei sich die Supplementwinkel γ, γ' in bekannter Weise auf 180° ergänzen.

Die bereits erwähnte, an der zentralen Umfangsrille 2 befindliche seitliche Blockflanke 12 erstreckt sich zwischen dem stumpfwinkeligen Blockeckbereich 5a und dem spitzwinkeligen Blockeckbereich 5b, weist an der beim Abrollen des Reifens bei Vorwärtsfahrt unmittelbar vor ihr in den Untergrund eintretenden Kerbe 6 ein einlaufendes Ende 12a und an der anderen angrenzenden Kerbe 6 ein auslaufendes Ende 12b auf. Die seitliche Blockflanke 12 setzt sich, in Umfangsrichtung betrachtet, aus einem vom einlaufenden Ende 12a ausgehenden, zur Laufstreifenperipherie angefasten Blockflankenumfangsabschnitt 12u₁ und einem vom auslaufenden Ende 12b ausgehenden fasenfreien Blockflankenumfangsabschnitt 12u₂ zusammen. Wie Fig. 3 zeigt, verläuft der fasenfreie Blockflankenumfangsabschnitt 12u₂, im in axialer Richtung ausgerichteten Querschnitt betrachtet, zur radialen Richtung unter einem konstanten Winkel ε von 0° bis 10°, insbesondere von 4° bis 8°, und endet in radialer Richtung an einer scharfen Blockkante 14 (Fig. 2). Gemäß Fig. 2 ist im angefasten Blockflankenumfangsabschnitt 12u₁ eine zur Laufstreifenperipherie verlaufende Fase 15 angesetzt, wobei der angefaste Blockflankenumfangsabschnitt 12u₁, und daher auch die Fase 15, eine an der Laufstreifenperipherie ermittelte Umfangslänge l_{F} von 40% bis 60%, insbesondere von 45% bis 55%, der Umfangslänge l_{PB} des Profilblockes 5 aufweist. Gemäß Fig. 4 ist die Fase 15 eine Schrägfläche, welche im in axialer Richtung ausgerichteten Querschnitt betrachtet, als gerade Linie erscheint, zur radialen Richtung unter einem konstanten Winkel δ von 35° bis 55°, insbesondere von 40° bis 45°, verläuft und in radialer Richtung bis in eine Tiefe t_{F} von 1,0 mm bis 3,0 mm, insbesondere von 1,5 mm bis 2,5 mm, reicht. Wie Fig. 2 und Fig. 4 in Kombination zeigen, weist die Fase 15 eine in der Tiefe t_{F} verlaufende, radial innere Fasenkante 15kᵢ und eine an der Laufstreifenperipherie liegende, radial äußere Fasenkante 15kₐ auf, wobei die Fasenkanten 15ᵢ, 15kₐ in Umfangsrichtung ausgerichtet sind.

Gemäß Fig. 1 ist beim gezeigten Ausführungsbeispiel in jedem Profilblock 5 eine zwischen einer Querrille 4 und der zentralen Umfangsrille 2 verlaufende Zusatznut 13 ausgebildet, wobei die innerhalb einer mittlere Profilblockreihe 1 befindlichen Zusatznuten 13 in Draufsicht parallel zueinander verlaufen. Wie insbesondere Fig. 2 zeigt, verläuft die Zusatznut 13, in Draufsicht betrachtet, gerade sowie in Verlängerung des jeweiligen Rillenabschnittes 4a, mündet am gegenseitigen Anschlussbereich des angefasten Blockflankenumfangsabschnittes 12u₁ und des fasenfreien Blockflankenumfangsabschnittes 12u₂ in die zentrale Umfangsrille 2 ein und weist eine Breite von 1,0 mm bis 2,0 mm sowie in radialer Richtung eine Tiefe von 1,0 mm bis 2,0 mm auf, wobei die Tiefe der Zusatznut 13 vorzugsweise höchstens der Tiefe t_{F} (Fig. 4) der Fase 15 beträgt. Die Zusatznut 13 verleiht dem mittleren Profilblock 5 ein Blocksegment 5c und ein gegenüber diesem eine kleinere Außenfläche aufweisendes Blocksegment 5d.

Gemäß Fig. 6 und Fig. 7 ragen die bereits erwähnten zur Laufstreifenperipherie offenen Kerben 6 gegenüber dem Niveau der seitlichen Blockflanken 12 in die mittlere Profilblockreihe 1 in axialer Richtung hinein. Jede Kerbe 6 weist zwei zwischen dem Rillenabschnitt 4c der Querrille 4 und der Umfangsrille 2 verlaufende, in Draufsicht V-förmig zueinander orientierte Begrenzungsflächen 6a, 6b sowie einen zwischen den Begrenzungsflächen 6a, 6b verlaufenden, im in axialer Richtung ausgerichteten Querschnitt betrachtet, knickfrei an den Rillengrund 2a anschließenden Boden 6c auf, wobei sich die Kerbe 6 vom Rillenabschnitt 4c der Querrille 4 zur Umfangsrille 2 kontinuierlich verbreitert.

Die Begrenzungsfläche 6a ist am stumpfwinkeligen Blockeckbereich 5a ausgebildet und grenzt an den entsprechenden fasenfreien Blockflankenumfangsabschnitt 12u₂ an. Die Begrenzungsfläche 6b ist am spitzwinkeligen Blockeckbereich 5b ausgebildet und grenzt an den entsprechenden angefasten Blockflankenumfangsabschnitt 12u₁ an. Die Begrenzungsflächen 6a, 6b schließen miteinander einen Winkel θ (Fig. 6) von 45° bis 85°, bevorzugt von 60° bis 80°, ein, verlaufen, im Querschnitt senkrecht zu ihrer Erstreckungsrichtung betrachtet, zur radialen Richtung unter einem Winkel von 0° bis 3° und sind, in Draufsicht betrachtet, zur axialen Richtung vorzugsweise jeweils unter Winkel θ' (Fig. 6) von zumindest 5°, insbesondere von zumindest 10°, orientiert. Beim gezeigten Ausführungsbeispiel ist zwischen jeder Begrenzungsfläche 6a, 6b und dem Boden 6c eine Übergangsrundung 6d (Fig. 6) ausgebildet, welche einen knickfreien Anschluss der Begrenzungsfläche 6a, 6b an den Boden 6c bildet.

Die Begrenzungsfläche 6a verläuft beim gezeigten Ausführungsbeispiel ferner in flächiger Fortführung der von der auslaufenden Blockkante 8 ausgehenden Blockflanke 10 und endet an der Laufstreifenperipherie an einem Blockkantenendabschnitt 8a der auslaufenden Blockkante 8.

Die Begrenzungsfläche 6b erstreckt sich radial innerhalb der an der Kerbe 6 liegenden Einmündung des Rillenabschnittes 4c zur Begrenzungsfläche 6a (Fig. 7). Am radial äußeren Ende der Begrenzungsfläche 6b ist eine zur Laufstreifenperipherie verlaufende, den spitzwinkeligen Blockeckbereich 5b abschrägende Eckfase 16 angesetzt, welche an die Fase 15 im angefasten Blockflankenumfangsabschnitt 12u₁ anschließt und mit dieser korreliert. Die Eckfase 16 ist eine ebene, trapezförmige Schrägfläche, welche bis in die bereits erwähnte Tiefe t_{F} (Fig. 4) reicht, eine in der Tiefe t_{F} verlaufende, an die radial innere Fasenkante 15kᵢ der Fase 15 anschließende, radial innere Fasenkante 16kᵢ und eine an die radial äußere Fasenkante 15kₐ der Fase 15 anschließende, an der Laufstreifenperipherie verlaufende radial äußere Fasenkante 16kₐ aufweist, wobei die Eckfase 16, im senkrecht zu den Fasenkanten 16kₐ, 16kᵢ ausgerichteten Querschnitt betrachtet (vergl. Lage der Schnittlinie V-V in Fig. 2), zur radialen Richtung unter einem Winkel λ (Fig. 5) von 40° bis 50°, insbesondere von 43° bis 47°, verläuft. Die Eckfase 16 und die Fase 15 schließen somit über eine gemeinsame Begrenzungskante 17 aneinander an, welche zwischen dem gegenseitigen Anschluss der radial inneren Fasenkante 15kᵢ an die radial innere Fasenkante 16kᵢ und dem gegenseitigen Anschluss der radial äußeren Fasenkante 15kₐ an die radial äußere Fasenkante 16kₐ verläuft.

Die Kerbe 6 weist eine zwischen der Begrenzungsfläche 6a und der Begrenzungsfläche 6b an der Umfangsrille 2, d.h. am Niveau der seitlichen Blockflanken 12, sowie parallel zur Laufstreifenperipherie ermittelte Breite b_{K} (Fig. 6, Fig. 7) von 120% bis 180%, insbesondere 140% bis 160%, bevorzugt 145% bis 155%, der Breite b_{c} (Fig. 6) des Rillenabschnittes 4c auf. Gemäß Fig. 6 weist die Kerbe 6 ferner eine an der Laufstreifenperipherie, gegenüber der radial inneren Fasenkante 15kᵢ der Fase 15 in axialer Richtung ermittelte Tiefe t_{K} von 0,5 mm bis 2,5 mm, insbesondere von 1,0 mm bis 2,0 mm, auf.

Insbesondere weist der Laufstreifen zumindest eine Profilblockreihe auf, welche mit Kerben und in diesen einmündenden Querrillen versehen ist. Die Profilblockreihe kann auch eine schulterseitige Profilblockreihe sein. Die Querrillen können eine von der beschriebenen Ausgestaltung abweichenden Verlauf aufweisen. Die Zusatznuten sind optional. Die Profilierung des Laufstreifens muss nicht laufrichtungsgebunden ausgeführt sein. Die Eckfasen sind optional. Außerdem können auch beide Blockeckbereich jeweils mit einer Eckfase versehen sein. Die Tiefe der Kerbe ist gegenüber dem Niveau der Blockflanke in axialer Richtung ermittelt, wobei die Tiefe - bei bis zur Laufstreifenperipherie reichenden Begrenzungsflächen - relativ zum radial äußeren Ende von einer der Begrenzungsflächen ermittelt ist und - falls nur eine der oder keine der Begrenzungsflächen bis zur Laufstreifenperipherie reicht - relativ zum radial äußeren Ende jener Begrenzungsfläche ermittelt ist, deren radial äußeres Ende in radialer Richtung einen größeren Abstand zur Laufstreifenperipherie aufweist.

### Bezugsziffernliste

- 1: mittlere Profilblockreihe
- 2: zentrale Umfangsrille
- 2a: Rillengrund
- 3: schulterseitige Umfangsrille
- 3a: Rillengrund
- 4: Querrille
- 4a, 4b, 4c: Rillenabschnitt
- 5: Profilblock
- 5a: stumpfwinkeliger Blockeckbereich
- 5b: spitzwinkliger Blockeckbereich
- 5c, 5d: Blocksegment
- 6: Kerbe
- 6a: Begrenzungsfläche
- 6b: Begrenzungsfläche
- 6c: Boden
- 6d: Übergangsrundung
- 7: einlaufende Blockkante
- 8: auslaufende Blockkante
- 8a: Blockkantenendabschnitt
- 9: Blockflanke
- 10: Blockflanke
- 11: seitliche Blockflanke
- 12: seitliche Blockflanke
- 12a: einlaufendes Ende
- 12b: auslaufendes Ende
- 12u₁: angefaster Blockflankenumfangsabschnitt
- 12u₂: fasenfreier Blockflankenumfangsabschnitt
- 13: Zusatznut
- 14: scharfe Blockkante
- 15: Fase
- 15kₐ: radial äußere Fasenkante
- 15kᵢ: radial innere Fasenkante
- 16: Eckfase
- 16kₐ: radial äußere Fasenkante
- 16kᵢ: radial innere Fasenkante
- 17: gemeinsame Begrenzungskante
- A-A: Linie (Reifenäquatorialebene)
- b_{c}, b_{K}: Breite
- l_{F}, l_{PB}: Umfangslänge
- m_{QR}: Rillenmittellinie
- R: Pfeil (Abrollrichtung)
- S₇: Pfeil (Sichtrichtung)
- t_{c}, t_{F}, t_{K}: Tiefe
- T_{P}: Profiltiefe
- Z₂, Z₆: Detail
- α, β, δ, ε, θ, θ', λ: Winkel
- γ, γ': Supplementwinkel

## Patentansprüche

1. Fahrzeugluftreifen mit einem Laufstreifen mit zumindest einer an zumindest einer Seite von einer Umfangsrille (2) mit einem Rillengrund (2a) begrenzten Profilblockreihe (1), welche durch eine Vielzahl von in Draufsicht parallel zueinander verlaufenden in Einmündungsbereichen in die Umfangsrille (2) einmündenden Querrillen (4) in Profilblöcke (5) gegliedert ist, wobei die Profilblöcke (5) jeweils zwei durch die Umfangsrille (2) und die Querrillen (4) gebildete Blockeckbereiche (5a, 5b) und eine sich zwischen den Blockeckbereichen (5a, 5b) und zwischen den Einmündungsbereichen der Querrillen (4) erstreckende, an der Umfangsrille (2) ausgebildete, zum Rillengrund (2a) der Umfangsrille (2) verlaufende, seitliche Blockflanke (12) aufweisen, wobei sich die seitliche Blockflanke (12) aus einem angefasten Blockflankenumfangsabschnitt (12u₁) mit einer eine Schrägfläche bildenden, zur Laufstreifenperipherie verlaufenden Fase (15) und einem fasenfreien Blockflankenumfangsabschnitt (12u₂), welcher an einer an der Laufstreifenperipherie verlaufenden Blockkante (14) endet, zusammensetzt,
**dadurch gekennzeichnet,**
**dass** Einmündungsbereiche von Querrillen (4) jeweils durch eine gegenüber dem Niveau der seitlichen Blockflanken (12) in die Profilblockreihe (1) in axialer Richtung hineinragende, zur Laufstreifenperipherie offene, sich zur Umfangsrille (2) kontinuierlich verbreiternde Kerbe (6) gebildet sind, welche zwei an den Blockeckbereichen (5a, 5b) benachbarter Profilblöcke (5) ausgebildete, in Draufsicht V-förmig zueinander sowie zwischen der jeweiligen Querrille (4) und der Umfangsrille (2) verlaufende Begrenzungsflächen (6a, 6b) aufweist, wobei an die eine Begrenzungsfläche (6a) ein fasenfreier Blockflankenumfangsabschnitt (12u₂) und an die andere Begrenzungsfläche (6b) ein angefaster Blockflankenumfangsabschnitt (12u₁) anschließt.

2. Fahrzeugluftreifen nach Anspruch 1, **dadurch gekennzeichnet, dass** der angefaste Blockflankenumfangsabschnitt (12u₁) eine Umfangslänge (l_{F}) von 40% bis 60%, insbesondere von 45% bis 55%, der Umfangslänge (l_{PB}) des zugehörigen Profilblockes (5) aufweist.

3. Fahrzeugluftreifen nach Anspruch 1 oder 2, **dadurch gekennzeichnet, dass** die in Draufsicht V-förmig zueinander verlaufenden Begrenzungsflächen (6a, 6b) der Kerbe (6) einen Winkel (θ) von 45° bis 85°, insbesondere von 60° bis 80°, einschließen.

4. Fahrzeugluftreifen nach einem der Ansprüche 1 bis 3, **dadurch gekennzeichnet, dass** die in Draufsicht V-förmig zueinander verlaufenden Begrenzungsflächen (6a, 6b) der Kerbe (6) zur axialen Richtung jeweils unter Winkel (θ') von zumindest 5°, insbesondere von zumindest 10°, verlaufen.

5. Fahrzugluftreifen nach einem der Ansprüche 1 bis 4, **dadurch gekennzeichnet, dass** die Kerbe (6) einen zwischen den Begrenzungsflächen (6a, 6b) verlaufenden Boden (6c) aufweist, welcher, im in axialer Richtung ausgerichteten Querschnitt betrachtet, knickfrei an den Rillengrund (2a) der Umfangsrille (2) anschließt.

6. Fahrzeugluftreifen nach einem der Ansprüche 1 bis 5, **dadurch gekennzeichnet, dass** die Kerbe (6) an der Umfangsrille (2) eine zwischen ihren Begrenzungsflächen (6a, 6b) parallel zur Laufstreifenperipherie ermittelte Breite (b_{K}) aufweist, welche 120% bis 180%, insbesondere 140% bis 160%, bevorzugt 145% bis 155%, einer an der Laufstreifenperipherie zwischen Blockkanten (8, 9) ermittelten Breite (b_{c}) der Querrille (4) beträgt, wobei die Breite (b_{c}) an der schmalsten Stelle der Querrille (4) ermittelt ist.

7. Fahrzeugluftreifen nach einem der Ansprüche 1 bis 6, **dadurch gekennzeichnet, dass** die Kerbe (6) eine gegenüber dem Niveau der Blockflanke (9) in axialer Richtung ermittelte Tiefe (t_{K}) von 0,5 mm bis 2,5 mm, insbesondere von 1,0 mm bis 2,0 mm, aufweist,
wobei die Tiefe (t_{K}) - bei bis zur Laufstreifenperipherie reichenden Begrenzungsflächen (6a, 6b) - relativ zum radial äußeren Ende von einer der Begrenzungsflächen (6a, 6b) ermittelt ist und
wobei die Tiefe (t_{K}) - falls nur eine der oder keine der Begrenzungsflächen (6a, 6b) bis zur Laufstreifenperipherie reicht - relativ zum radial äußeren Ende jener Begrenzungsfläche (6b) ermittelt ist, welches in radialer Richtung einen größeren Abstand zur Laufstreifenperipherie aufweist.

8. Fahrzeugluftreifen nach einem der Ansprüche 1 bis 7, **dadurch gekennzeichnet, dass** die Begrenzungsflächen (6a, 6b) der Kerbe (6), im in radialer Richtung verlaufenden, in Draufsicht senkrecht zu ihrer Erstreckungsrichtung ausgerichteten Querschnitt betrachtet, zur radialen Richtung unter einem Winkel von 0° bis 3° verlaufen.

9. Fahrzeugluftreifen nach einem der Ansprüche 1 bis 8, **dadurch gekennzeichnet, dass** die eine Begrenzungsfläche (6a) der Kerbe (6) bis zur Laufstreifenperipherie reicht und in flächiger Fortführung einer die Querrille (4) mitbegrenzenden Blockflanke (10) des Profilblockes (5) ausgeführt ist.

10. Fahrzeugluftreifen nach einem der Ansprüche 1 bis 9, **dadurch gekennzeichnet, dass** an der einen Begrenzungsfläche (6b) der Kerbe (6) eine zur Laufstreifenperipherie sowie in Draufsicht zwischen der Querrille (4) und der Umfangsrille (2) verlaufende, den Blockeckbereich (5b) abschrägende Eckfase (16) ausgebildet ist.

11. Fahrzeugluftreifen nach Anspruch 10, **dadurch gekennzeichnet, dass** die Eckfase (16) und die Fase (15) des angefasten Blockflankenumfangsabschnittes (12u₁) in radialer Richtung bis in eine Tiefe (t_{F}) von 1,0 mm bis 3,0 mm, insbesondere von 1,5 mm bis 2,5 mm, reichen.

12. Fahrzeugluftreifen nach Anspruch 10 oder 11, **dadurch gekennzeichnet, dass** die Eckfase (16) und die Fase (15) des angefasten Blockflankenumfangsabschnittes (12u₁) über eine gemeinsame Begrenzungskante (17) aneinander anschließen.

13. Fahrzeugluftreifen nach Anspruch 12, **dadurch gekennzeichnet, dass** die Eckfase (16) und die Fase (15) des angefasten Blockflankenumfangsabschnittes (12u₁) jeweils eine radial innere Fasenkante (15kᵢ, 16kᵢ) aufweisen, welche am radial inneren Ende der gemeinsamen Begrenzungskante (17) zusammentreffen.

14. Fahrzeugluftreifen nach einem der Ansprüche 10 bis 13, **dadurch gekennzeichnet, dass** der eine Blockeckbereich (5a) des Profilblockes (5) ein stumpfwinkeliger Blockeckbereich (5a) und der andere Blockeckbereich (5b) des Profilblockes (5) ein spitzwinkliger Blockeckbereich (5b) ist, wobei die Eckfase (16) am spitzwinkeligen Blockeckbereich (5b) ausgebildet ist und wobei, die Querrille (4) - bezogen auf die Rillenmittellinie (m_{QR}) - mit der Umfangsrichtung einen über den stumpfwinkligen Blockeckbereich (5a) gemessenen stumpfen Supplementwinkel (γ) und einen über den spitzwinkligen Blockeckbereich (5b) gemessenen spitzen Supplementwinkel (γ') einschließt.

15. Fahrzeugluftreifen nach einem der Ansprüche 10 bis 14, **dadurch gekennzeichnet, dass** der Laufstreifen laufrichtungsgebunden ausgeführt ist, wobei beim Abrollen des Reifens bei Vorwärtsfahrt (Pfeil R) - bezogen auf jeden Profilblock (5) - der Blockeckbereich (5b), an welchem die Eckfase (16) ausgebildet ist, vor dem jeweils anderen Blockeckbereich (5a) in den Untergrund eintritt.

## Claims

1. Pneumatic vehicle tyre having a tread strip with at least one profile block row (1) that on at least one side is delimited by a circumferential groove (2) which has a groove base (2a) and is divided into profile blocks (5) by a multiplicity of transverse grooves (4) that when viewed from above run parallel to one another and in mouth regions open into the circumferential groove (2), wherein the profile blocks (5) have in each case two block corner regions (5a, 5b) formed by the circumferential groove (2) and the transverse grooves (4), and one lateral block flank (12) which extends between the block corner regions (5a, 5b) and between the mouth regions of the transverse grooves (4) and is configured on the circumferential groove (2) and runs to the groove base (2a) of the circumferential groove (2), wherein the lateral block flank (12) is composed of a bevelled block-flank circumferential portion (12u₁) having a bevel (15) which forms an oblique face and runs to the tread strip periphery, and a bevel-free block-flank circumferential portion (12u₂) which terminates at a block edge (14) running on the tread strip periphery,
**characterized in that**
mouth regions of transverse grooves (4) are in each case formed by a notch (6) which in relation to the level of the lateral block flanks (12) protrudes into the profile block row (1) in the axial direction, is open toward the tread strip periphery and widens continuously to the circumferential groove (2), said notch having two delimiting faces (6a, 6b) which are configured on the block corner regions (5a, 5b) of adjacent profile blocks (5) and when viewed from above run in a V-shaped manner with respect to one another and between the respective transverse groove (4) and the circumferential groove (2), wherein a bevel-free block-flank circumferential portion (12u₂) adjoins the one delimiting face (6a), and a bevelled block-flank circumferential portion (12u₁) adjoins the other delimiting face (6b).

2. Pneumatic vehicle tyre according to Claim 1, **characterized in that** the bevelled block-flank circumferential portion (12u₁) has a circumferential length (l_{F}) of 40% to 60%, in particular of 45% to 55%, of the circumferential length (l_{PB}) of the associated profile block (5).

3. Pneumatic vehicle tyre according to Claim 1 or 2, **characterized in that** the delimiting faces (6a, 6b) of the notch (6), which when viewed from above run in a V-shaped manner with respect to one another, enclose an angle (θ) of 45° to 85°, in particular of 60° to 80°.

4. Pneumatic vehicle tyre according to one of Claims 1 to 3, **characterized in that** the delimiting faces (6a, 6b) of the notch (6), which when viewed from above run in a V-shaped manner with respect to one another, in each case run at an angle (θ') of at least 5°, in particular of at least 10°, in relation to the axial direction.

5. Pneumatic vehicle tyre according to one of Claims 1 to 4, **characterized in that** the notch (6) has a bottom (6c) running between the delimiting faces (6a, 6b), which when viewed in the cross section oriented in the axial direction, connects to the groove base (2a) of the circumferential groove (2) without kinks.

6. Pneumatic vehicle tyre according to one of Claims 1 to 5, **characterized in that** the notch (6) on the circumferential groove (2) has a width (b_{K}), determined between its delimiting faces (6a, 6b) parallel to the tread strip periphery, which is 120% to 180%, in particular 140% to 160%, preferably 145% to 155%, of a width (b_{c}) of the transverse groove (4) determined at the tread strip periphery between block edges (8, 9), wherein the width (b_{c}) is determined at the narrowest point of the transverse groove (4).

7. Pneumatic vehicle tyre according to one of Claims 1 to 6, **characterized in that** the notch (6) has a depth (t_{K}) of 0.5 mm to 2.5 mm, in particular of 1.0 mm to 2.0 mm, determined in the axial direction in relation to the level of the block flank (9),
wherein the depth (t_{K}) - in the case of delimiting faces (6a, 6b) extending to the tread strip periphery - is determined relative to the radially outer end of one of the delimiting faces (6a, 6b), and
wherein the depth (t_{K}) - if only one of the or none of the delimiting faces (6a, 6b) extends to the tread strip periphery - is determined relative to the radially outer end of that delimiting face (6b) that has a larger spacing from the tread strip periphery in the radial direction.

8. Pneumatic vehicle tyre according to one of Claims 1 to 7, **characterized in that** the delimiting faces (6a, 6b) of the notch (6), when viewed in the cross section which runs in the radial direction and when viewed from above is oriented perpendicularly to their direction of extent, run at an angle of 0° to 3° in relation to the radial direction.

9. Pneumatic vehicle tyre according to one of Claims 1 to 8, **characterized in that** the one delimiting face (6a) of the notch (6) extends to the tread strip periphery and is embodied in a planar continuation of a block flank (10) of the profile block (5) that conjointly delimits the transverse groove (4).

10. Pneumatic vehicle tyre according to one of Claims 1 to 9, **characterized in that** a tapering corner bevel (16), which tapers the block corner region (5b) and runs to the tread strip periphery and when viewed from above runs between the transverse groove (4) and the circumferential groove (2), is configured on the one delimiting face (6b) of the notch (6).

11. Pneumatic vehicle tyre according to Claim 10, **characterized in that** the corner bevel (16) and the bevel (15) of the bevelled block-flank circumferential portion (12u₁) extend in the radial direction to a depth (t_{F}) of 1.0 mm to 3.0 mm, in particular of 1.5 mm to 2.5 mm.

12. Pneumatic vehicle tyre according to Claim 10 or 11, **characterized in that** the corner bevel (16) and the bevel (15) of the bevelled block-flank circumferential portion (12u₁) adjoin one another via a common delimiting edge (17).

13. Pneumatic vehicle tyre according to Claim 12, **characterized in that** the corner bevel (16) and the bevel (15) of the bevelled block-flank circumferential portion (12u₁) each have a radially inner bevel edge (15kᵢ, 16kᵢ), the latter meeting at the radially inner end of the common delimiting edge (17).

14. Pneumatic vehicle tyre according to one of Claims 10 to 13, **characterized in that** the one block corner region (5a) of the profile block (5) is an obtuse-angle block corner region (5a) and the other block corner region (5b) of the profile block (5) is an acute-angle block corner region (5b), wherein the corner bevel (16) is configured on the acute-angle block corner region (5b), and wherein the transverse groove (4) - in terms of the groove centre line (m_{QR}) - conjointly with the circumferential direction encloses an obtuse adjacent angle (γ) measured over the obtuse-angle block corner region (5a), and an acute adjacent angle (γ') measured over the acute block corner region (5b).

15. Pneumatic vehicle tyre according to one of Claims 10 to 14, **characterized in that** the tread strip is directional, wherein when the tyre rolls forward (arrow R) - with reference to each profile block (5) - the block corner region (5b) on which the corner bevel (16) is configured enters the ground before the respective other block corner region (5a).

## Revendications

1. Pneumatique de véhicule avec une bande de roulement avec au moins une rangée de blocs de profil (1) délimitée sur au moins un côté par une rainure circonférentielle (2) avec un fond de rainure (2a), qui est divisée en blocs de profil (5) par une pluralité de rainures transversales (4) s'étendant parallèlement les unes aux autres en vue de dessus, débouchant dans la rainure circonférentielle (2) dans des zones d'embouchure, les blocs de profil (5) présentant chacun deux zones d'angle de bloc (5a, 5b) formées par la rainure circonférentielle (2) et les rainures transversales (4) et un flanc de bloc latéral (12) s'étendant entre les zones d'angle de bloc (5a, 5b) et entre les zones d'embouchure des rainures transversales (4), réalisé sur la rainure circonférentielle (2), s'étendant vers le fond de rainure (2a) de la rainure circonférentielle (2), le flanc de bloc latéral (12) se composant d'une section circonférentielle de flanc de bloc chanfreinée (12u₁) avec un chanfrein (15) formant une surface inclinée, s'étendant vers la périphérie de la bande de roulement, et d'une section circonférentielle de flanc de bloc sans chanfrein (12u₂), qui se termine sur un bord de bloc (14) s'étendant à la périphérie de la bande de roulement,
**caractérisé en ce que**
des zones d'embouchure de rainures transversales (4) sont formées respectivement par une entaille (6) faisant saillie en direction axiale par rapport au niveau des flancs de bloc latéraux (12) dans la rangée de blocs de profil (1), ouverte vers la périphérie de la bande de roulement, s'élargissant de manière continue vers la rainure circonférentielle (2), laquelle entaille deux surfaces de délimitation (6a, 6b) réalisées sur les zones d'angle de bloc (5a, 5b) de blocs de profil (5) voisins, s'étendant en forme de V l'une par rapport à l'autre en vue de dessus ainsi qu'entre la rainure transversale (4) respective et la rainure circonférentielle (2), une section circonférentielle de flanc de bloc sans chanfrein (12u₂) se raccordant à l'une des surfaces de délimitation (6a) et une section circonférentielle de flanc de bloc chanfreinée (12u₁) se raccordant à l'autre surface de délimitation (6b).

2. Pneumatique de véhicule selon la revendication 1, **caractérisé en ce que** la section circonférentielle de flanc de bloc chanfreinée (12u₁) présente une longueur circonférentielle (l_{F}) de 40 % à 60 %, notamment de 45 % à 55 %, de la longueur circonférentielle (l_{PB}) du bloc de profil (5) correspondant.

3. Pneumatique de véhicule selon la revendication 1 ou 2, **caractérisé en ce que** les surfaces de délimitation (6a, 6b) de l'entaille (6), qui s'étendent en forme de V l'une par rapport à l'autre en vue de dessus, forment un angle (θ) de 45° à 85°, notamment de 60° à 80°.

4. Pneumatique de véhicule selon l'une quelconque des revendications 1 à 3, **caractérisé en ce que** les surfaces de délimitation (6a, 6b) de l'entaille (6), qui s'étendent en forme de V l'une par rapport à l'autre en vue de dessus, s'étendent par rapport à la direction axiale respectivement selon un angle (θ') d'au moins 5°, notamment d'au moins 10°.

5. Pneumatique de véhicule selon l'une quelconque des revendications 1 à 4, **caractérisé en ce que** l'entaille (6) présente un fond (6c) s'étendant entre les surfaces de délimitation (6a, 6b), qui, vu en coupe transversale orientée dans la direction axiale, se raccorde sans inflexion au fond de rainure (2a) de la rainure circonférentielle (2).

6. Pneumatique de véhicule selon l'une quelconque des revendications 1 à 5, **caractérisé en ce que** l'entaille (6) sur la rainure circonférentielle (2) présente une largeur (b_{K}) déterminée entre ses surfaces de délimitation (6a, 6b) parallèlement à la périphérie de la bande de roulement, qui représente 120 % à 180 %, notamment 140 % à 160 %, de préférence 145 % à 155 %, d'une largeur (b_{c}) de la rainure transversale (4) déterminée à la périphérie de la bande de roulement entre des bords de bloc (8, 9), la largeur (b_{c}) étant déterminée à l'endroit le plus étroit de la rainure transversale (4).

7. Pneumatique de véhicule selon l'une quelconque des revendications 1 à 6, **caractérisé en ce que** l'entaille (6) présente une profondeur (t_{K}), déterminée par rapport au niveau du flanc de bloc (9) dans la direction radiale, de 0,5 mm à 2,5 mm, notamment de 1,0 mm à 2,0 mm.
la profondeur (t_{K}) - pour des surfaces de délimitation (6a, 6b) s'étendant jusqu'à la périphérie de la bande de roulement - étant déterminée par rapport à l'extrémité radialement extérieure de l'une des surfaces de délimitation (6a, 6b) et
la profondeur (t_{K}) - dans le cas où une seule ou aucune des surfaces de délimitation (6a, 6b) s'étend jusqu'à la périphérie de la bande de roulement - étant déterminée par rapport à l'extrémité radialement extérieure de la surface de délimitation (6b) qui présente dans la direction radiale une plus grande distance par rapport à la périphérie de la bande de roulement.

8. Pneumatique de véhicule selon l'une quelconque des revendications 1 à 7, **caractérisé en ce que** les surfaces de délimitation (6a, 6b) de l'entaille (6), considérées dans la section transversale s'étendant dans la direction radiale, orientée en vue de dessus perpendiculairement à leur direction d'extension, s'étendent selon un angle de 0° à 3° par rapport à la direction radiale.

9. Pneumatique de véhicule selon l'une quelconque des revendications 1 à 8, **caractérisé en ce qu'**une surface de délimitation (6a) de l'entaille (6) s'étend jusqu'à la périphérie de la bande de roulement et est réalisée dans le prolongement à plat d'un flanc de bloc (10) du bloc de profil (5) délimitant également la rainure transversale (4).

10. Pneumatique de véhicule selon l'une quelconque des revendications 1 à 9, **caractérisé en ce qu'**un chanfrein d'angle (16) s'étendant vers la périphérie de la bande de roulement ainsi que, en vue de dessus, entre la rainure transversale (4) et la rainure circonférentielle (2), biseautant la zone d'angle de bloc (5b) est réalisé sur l'une des surfaces de délimitation (6b) de l'entaille (6).

11. Pneumatique de véhicule selon la revendication 10, **caractérisé en ce que** le chanfrein d'angle (16) et le chanfrein (15) de la section circonférentielle de flanc de bloc chanfreinée (12u₁) s'étendent dans la direction radiale jusqu'à une profondeur (t_{F}) de 1,0 mm à 3,0 mm, notamment de 1,5 mm à 2,5 mm.

12. Pneumatique de véhicule selon la revendication 10 ou 11, **caractérisé en ce que** le chanfrein d'angle (16) et le chanfrein (15) de la section circonférentielle de flanc de bloc chanfreinée (12u₁) se raccordent l'un à l'autre par l'intermédiaire d'un bord de délimitation commun (17).

13. Pneumatique de véhicule selon la revendication 12, **caractérisé en ce que** le chanfrein d'angle (16) et le chanfrein (15) de la section circonférentielle de flanc de bloc chanfreinée (12u₁) présentent chacun un bord de chanfrein radialement intérieur (15kᵢ, 16kᵢ) qui se rejoignent à l'extrémité radialement intérieure du bord de délimitation commun (17).

14. Pneumatique de véhicule selon l'une quelconque des revendications 10 à 13, **caractérisé en ce que** l'une des zones d'angle de bloc (5a) du bloc de profil (5) est une zone d'angle de bloc (5a) à angle obtus et l'autre zone d'angle de bloc (5b) du bloc de profil (5) est une zone d'angle de bloc (5b) à angle aigu, le chanfrein d'angle (16) étant réalisé sur la zone d'angle de bloc (5b) à angle aigu et la rainure transversale (4) - par rapport à la ligne médiane de rainure (m_{QR}) - formant avec la direction circonférentielle un angle de supplément obtus (γ) mesuré sur la zone d'angle de bloc à angle obtus (5a) et un angle de supplément aigu (γ') mesuré sur la zone d'angle de bloc à angle aigu (5b).

15. Pneumatique de véhicule selon l'une quelconque des revendications 10 à 14, **caractérisé en ce que** la bande de roulement est réalisée sous forme directionnelle, la zone d'angle de bloc (5b) sur laquelle est réalisé le chanfrein d'angle (16) pénétrant dans le sol avant l'autre zone d'angle de bloc (5a) respective lorsque le pneumatique roule en marche avant (flèche R) - par rapport à chaque bloc de profil (5).
